# EUROPEAN PATENT SPECIFICATION

(11) **EP 2 998 774 B1**
(45) Date of publication and mention of the grant of the patent: **28.08.2019**
(21) Application number: 15184735.7
(22) Date of filing: 10.09.2015
(51) Int. Cl.: G02B 6/44, C03C 25/106

(54) **OPTICAL FIBER COATING TO REDUCE FRICTION AND STATIC CHARGE**
GLASFASERBESCHICHTUNG ZUR VERRINGERUNG VON REIBUNG UND STATISCHER LADUNG
REVÊTEMENT DE FIBRE OPTIQUE POUR RÉDUIRE LE FROTTEMENT ET LA CHARGE STATIQUE

(30) Priority: 19.09.2014 US 201462052806 P
(43) Date of publication of application: 23.03.2016
(73) Proprietor: Weatherford Technology Holdings, LLC, Houston, TX 77056 (US)
(72) Inventor: DOWD, Edward M, Madison, CT 06443 (US); KIDDY, Jason Scott, Gambrills, MD 21054 (US); SEQUINO, Mary Margaret, North Haven, CT 06473 (US)
(74) Representative: Talbot-Ponsonby, Daniel Frederick

(56) References cited:
- JP-A- H08 182 962
- US-A- 4 213 672
- US-A- 5 815 908
- US-A1- 2005 169 588
- US-A1- 2013 098 528

## Description

Aspects of the present disclosure generally relate to fabricating an armoured cable having one or more optical fibres contained therein. More particularly, aspects of the present disclosure relate to reducing friction and static charge when inserting the one or more optical fibres in one or more guide tubes during fabrication of the armoured cable.

Downhole optical fibre cables are often manufactured using an outer armour for protection of one or more optical fibres contained therein. It is often desirable to have some amount of excess fibre length (EFL) in the armoured cable, for example, to reduce strain on the optical fibres. EFL generally refers to an excess length of the fibre relative to the outer armour.

The outer armour may typically be formed by seam welding the outer armour over another (inner) tube that contains the optical fibres. The inner tube may protect the optical fibre from the extreme heat generated during the welding process. However, the use of an inner tube adds substantial cost to the armoured cable.

In some cases, the optical fibre(s) may be put into an armour tube after the tube is manufactured by pushing fibre into the tube with the aid of gas or liquids. Unfortunately, this is a costly and time-consuming process and, in addition, it is difficult to achieve a desired amount of EFL.

For example, one or more optical fibres may be pushed into a metal tube when manufacturing a fibre in metal tube (FIMT), as described in U.S. Patent No. 7,024,081 to Dowd et al., herein incorporated by reference in its entirety. During fabrication of a FIMT, the metal strip stock may be fed into the forming rollers which then pull the strip along as the strip is formed into a tube and welded at the seam. The tube may be welded somewhat larger in diameter than the finished tube size at this point. The optical fibres and gel material (if used) may be fed through guide tubes parallel to the strip stock and past the welding zone. The optical fibres are not pushed into the guide tubes; rather, the fibres get caught in the seam-welded metal tube by friction and are pulled at low tension from payoff spools through the guide tubes and into the metal tube. If used, gel will aid in pulling the fibres and can also have limited control of the overstuff, based on gel pumping volume. After welding, while still on the line, the assembly may be pulled through a sizing die to form the final FIMT diameter. A capstan may be located downstream of the die. The force involved in pulling the oversized tube through the die also stretches the tube, pulling extra fibre in from the fibre payoff spool. When the FIMT exits the capstan, the tension is reduced, and the FIMT has a small relax in length, yielding fibre overstuff. This method may be difficult to perform successfully with ¼" (6mm) heavy wall cable.

As an alternative, fibre overstuff may be added to the tube by running the tube through a series of rollers, which works the metal and effectively shrinks the length of the tube. This alternative method can be used for larger tubes, like ¼" (6mm), but is limited in the amount of overstuff that can be achieved and also entails extra processing.

US2013/098528 discloses a method whereby optical fibres are introduced directly into a welding process. US2005/169588 discloses an optical fibre unit having a sheath to which a coating is applied.

Certain aspects of the present disclosure provide techniques and corresponding apparatus for making armoured cables with optical fibres contained therein. The techniques may be utilized to control an amount of effective fiber length (EFL) in the armoured cables. The techniques may also allow introduction of optical fibres directly into a welding process without using an inner tube in the final armoured cable. The techniques may also be utilized to reduce friction and/or static charge on the optical fibres as the fibres are pushed through a guide tube that protects the fibres during the welding process.

A first aspect of the present disclosure provides a system for making an armoured cable. The system generally includes a tube-forming device configured to seam weld an armour tubing of the armoured cable; at least one guide tube disposed in a welding zone in which a seam of the armour tubing is welded, the at least one guide tube positioned to protect at least one optical fibre during welding of the seam, but is not part of the armoured cable after the making; and a coating device configured to coat the at least one optical fibre with a coating, wherein the coating is configured to reduce friction between the at least one optical fibre and the at least one guide tube during an insertion operation.

A second aspect of the present disclosure provides a method for making an armoured cable. The method generally includes coating at least one optical fibre with a coating; inserting the at least one optical fibre into a guide tube, wherein the coating is configured to reduce friction between the at least one optical fibre and the guide tube during the insertion; and seam welding an armour tubing of the armoured cable, wherein the guide tube is disposed in a welding zone in which a seam of the armour tubing is welded, the guide tube positioned to protect the at least one optical fibre during welding of the seam, but is not part of the armoured cable after the making.

Embodiments of the present disclosure provide an apparatus for making an armoured cable. The apparatus generally includes means for coating at least one optical fibre with a coating; means for inserting the at least one optical fibre into a guide tube, wherein the coating is configured to reduce friction between the at least one optical fibre and the guide tube during the insertion; and means for seam welding an armour tubing of the armoured cable, wherein the guide tube is disposed in a welding zone in which a seam of the armour tubing is welded, the guide tube positioned to protect the at least one optical fibre during welding of the seam, but is not part of the armoured cable after the making.

Embodiments of the present disclosure provide an armoured cable. The armored cable generally includes a seam-welded armour tubing and at least one optical fibre disposed in the armour tubing and having a coating of graphite, molybdenum disulphide, or boron nitrite.

According to certain embodiments, the optical fibre includes a core, a cladding surrounding the core, and a polymer layer surrounding the cladding, wherein the coating surrounds the polymer layer.

So that the manner in which the above recited features of the present disclosure can be understood in detail, a more particular description, briefly summarized above, may be had by reference to aspects, some of which are illustrated in the appended drawings. It is to be noted, however, that the appended drawings illustrate only typical aspects of this disclosure and are therefore not to be considered limiting of this disclosure's scope, for the disclosure may admit to other equally effective aspects.
FIG. 1 illustrates a technique of making an armoured cable, in accordance with one aspect of the present disclosure.
FIG. 2 illustrates a technique of making an armoured cable using a banded tractor feed mechanism as a fibre feed mechanism, in accordance with one aspect of the present disclosure.
FIG. 3 illustrates an example control algorithm for controlling excess fibre length (EFL) when making an armoured cable, in accordance with one aspect of the present disclosure.
FIG. 4 illustrates an example cross-sectional view of a single optical fibre in a fibre guide tube in a welding zone for forming a seam-welded armour tube, in accordance with one aspect of the present disclosure.
FIG. 5 illustrates an example cross-sectional view of multiple optical fibres in a fibre guide tube in a welding zone for forming a welded armour tube, in accordance with one aspect of the present disclosure.
FIG. 6 illustrates an example cross-sectional view of optical fibre in a fibre guide tube, surrounded by an outer guide tube, in a welding zone for forming a welded armour tube, in accordance with one aspect of the present disclosure.
FIG. 7 illustrates an example cross-sectional view of optical fibres in multiple fibre guide tubes, surrounded by an outer guide tube, in a welding zone for forming a welded armour tube, in accordance with one aspect of the present disclosure.
FIG. 8 is a flow diagram of example operations for controlling processing rates during fabrication of an armoured cable, in accordance with one aspect of the present disclosure.
FIG. 9 is a flow diagram of example operations for coating an optical fibre to reduce friction and static, in accordance with one aspect of the present disclosure.
FIG. 10 is a flow diagram of example operations for making an armored cable, in accordance with one aspect of the present disclosure.

Certain aspects of the present disclosure provide techniques and corresponding apparatus for fabricating armoured cables with optical fibres contained therein. The techniques may help overcome process difficulties, including control of excess fibre length (EFL) in a finished armoured cable and protecting optical fibres from the extreme heat generated during the welding process.

As described herein, the techniques may allow fibres to be introduced directly into an armour tubing during a seam welding process, while eliminating the use of an inner tube, also referred to as a sheath, surrounding the fibres in the final armoured cable. A desired EFL may be maintained by adjusting a feed rate of the optical fibre(s), during the welding process, as a function of the desired EFL and a feed rate of the armour tubing.

With many cable designs, a smaller inner tube, or sheath, may already contain the EFL and also acts as a shield for protecting the fibres from the heat of armour tube welding. If made of metal, the inner tube typically has a relatively thin wall, so manufacture thereof takes relatively low energy to weld with less possibility of damaging the optical fibres. The EFL of an inner tube is generally produced by means of elongation and relaxation of the tube length in the process line of fabricating the tube. Controlled pumping of a filler gel with the fibres may also be used as an aid to produce EFL. This fibre-containing inner tube is then introduced to the armour tube during the armour tube seam-welding process.

Unfortunately, these approaches may not be suitable for manufacturing a cable with optical fibres protected within a relatively thick walled armour tube, as is commonly used in downhole applications (*e.g*., to interrogate downhole optical sensors and/or perform distributed sensing operations).

### EXAMPLE ARMOURED CABLE FABRICATION

According to aspects of the present disclosure, one approach to manufacturing a cable consisting of optical fibres within a heavy walled armour tube (with no inner tube) is to feed (*e.g*., push) the optical fibres into the armour tube during the tube welding process (*e.g*., as the armour tube is being formed by welding or some other process).

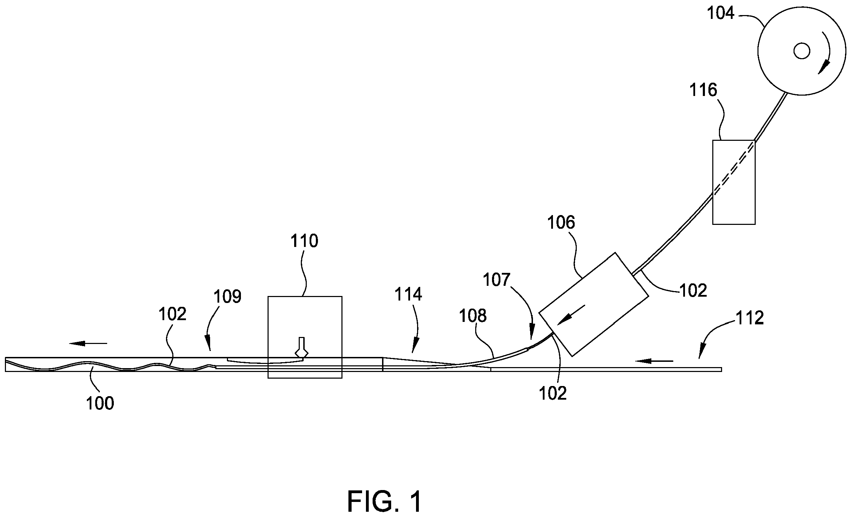

FIG. 1 illustrates fabrication of an armoured cable, in accordance with one aspect of the present disclosure. The armoured cable comprises an armour tube 100 and one or more optical fibres 102 (only one optical fibre is illustrated in FIG. 1 for simplicity). To form the armour tube 100, flat tube strip stock at 112 may be fed to a tube forming stage 114, which gradually rolls up the sides of the tube strip stock into a tube as the tube strip stock moves through the process at a particular tube rate. The seam (which may be a 1/4 in. seam) in the nearly completed tube is then welded in the welding zone 110 to form a completed, seam-welded armour tube.

Protection of the fibres 102 from the armour tube welding process may be provided by using guide tubes 108. The fibre guide tubes 108 may be made of metal, ceramic, or any of various other suitable heat-resistant materials. The guide tubes 108 may be fixed in position in the welding zone 110, perhaps at least at or near the welding point. The guide tube's fibre entrance 107 may be located (just) before or in the armour tube's tube forming stage 114. The guide tube's fibre exit 109 may be disposed inside the welded armour tube, beyond a point at which heat from welding would damage the fibres.

The amount of EFL in the finished armoured cable may be controlled by the ratio of the fibre pushing speed to the tube welding line speed (*e.g*., the ratio of these feed rates generally determines the amount of EFL). The fibre 102 is pushed through the guide tube 108 with a fibre feed device 106, a mechanism that can feed the fibre from a fibre source 104 at a controlled rate. The EFL can then be managed by controlling the fibre's feed rate as compared to the armour tube welding line speed (*i.e.*, the tube rate).

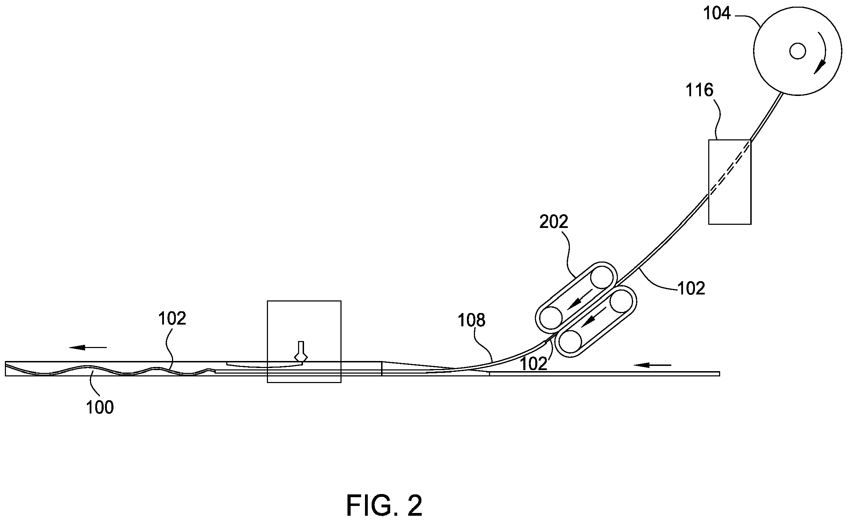

As illustrated in FIG. 2, the mechanism that feeds fibres into the guide tubes may be a banded tractor feed mechanism 202 for pulling the fibres from the fibre source 104 (*e.g*., one or more spools) and pushing the fibres into the guide tubes 108. Alternatively, a roller/capstan, a gas venturi, or any other device that can push the fibres into the guide tubes 108 may be used as a feed mechanism. Pumping a viscous gel material inside the fibre guide tube 108 will also feed fibre into the armour tube process.

The optical fibre 102 may be composed of any of various suitable materials, such as glasses and/or plastics (*e.g*., silica, phosphate glass, glass and plastic, or solely plastic). Also, a multi-mode, birefringent, polarization-maintaining, polarizing, multi-core, flat or planar (where the optical waveguide is rectangular shaped), or other optical waveguide may be used if desired. The fibre or waveguide may contain one or more sensors within (*e.g*., laser written directly) or attached thereto (*e.g*., spliced), including Bragg grating type sensors.

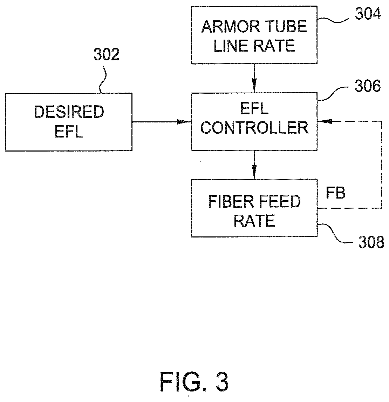

FIG. 3 illustrates an example control algorithm for controlling excess fibre length (EFL) when making an armoured cable, in accordance with one aspect of the present disclosure. As illustrated, an EFL controller 306 may control the fibre feed rate 308 (*i.e.*, the rate at which the optical fibres are fed into the process for forming the armour tubing) based on a desired EFL 302 and the armour tube line rate 304 (*i.e.*, the rate at which material for forming the armour tubing is fed into the formation process). As noted above, more generally, the EFL controller may control the ratio of the feed rates 304 and 308 to achieve the desired EFL 302. For certain aspects, as illustrated in FIG. 3, the actual fibre feed rate 308 may be fed back to the EFL controller 306, for a closed loop control algorithm.

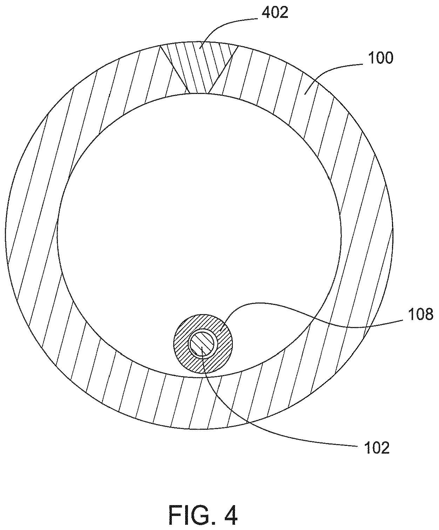

FIG. 4 illustrates an example cross-sectional view of a single optical fibre 102 in a fibre guide tube 108 in the welding zone for forming a welded armour tube having a seam 402, in accordance with one aspect of the present disclosure. For certain aspects as shown, the guide tube 108 may position the optical fibre 102 opposite from the location of the welding zone, in an effort to further prevent damage to the optical fibre during the welding process.

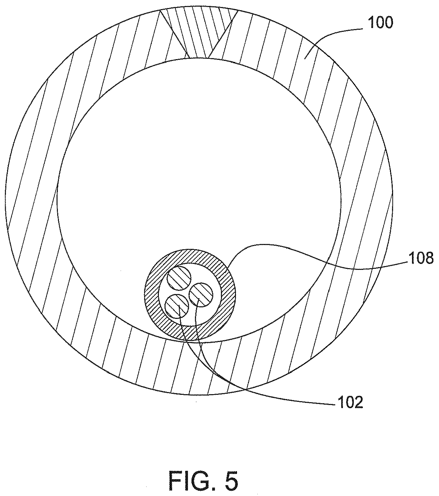

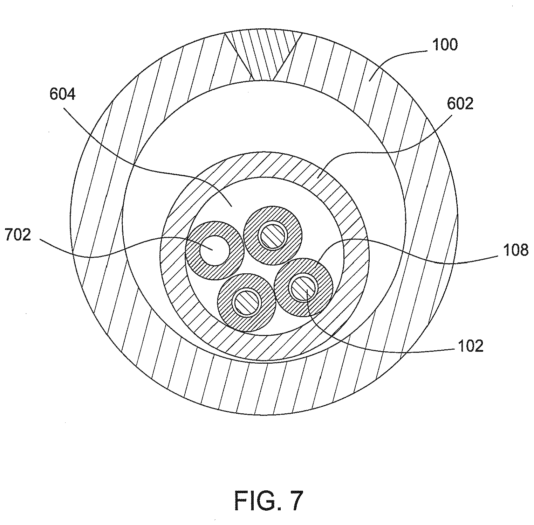

As illustrated in FIG. 5, the fibre feed/guide tube process may be made to feed multiple optical fibres at once into the armour tube welding process. This can be done with multiple fibres 102 inside each of one or more guide tubes 108 as shown, with a single optical fibre in each of multiple guide tubes, as portrayed in FIG. 7, described below, or with any combination thereof.

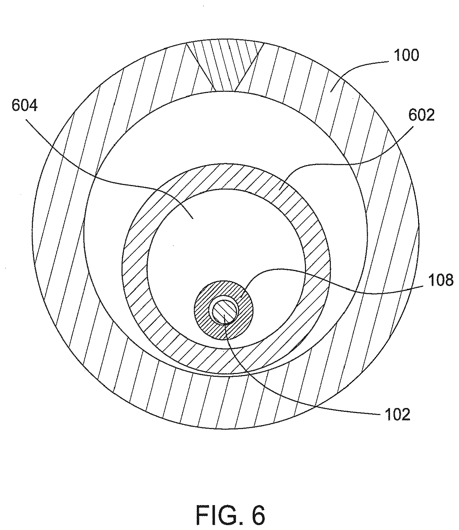

As depicted in FIG. 6, one or more additional (outer) tubes 602 may be placed around the fibre guide tube(s) 108. The space 604 between the additional tubes 602 and the fibre guide tube(s) 108 may permit fluid flow in an effort to cool the fibre(s) 102 during the welding process. For example, an inert gas purge in this space 604 may be used to provide additional heat protection for the fibre(s) in the welding zone. The space 604 may also permit flow of other materials, such as gel filling, adhesives, or lubricants.

As shown in FIG. 7, one or more additional inner guide tubes 702 may also be used for addition of gel filling, adhesives, lubricants, etc. around the optical fibres 102. These materials may be continuously or intermittently flowing when added. The additional inner guide tubes 702 may not be used for feeding optical fibres into the armour tube. The additional inner guide tubes 702 may be made of metal, ceramic, or any of various other suitable heat resistant materials.

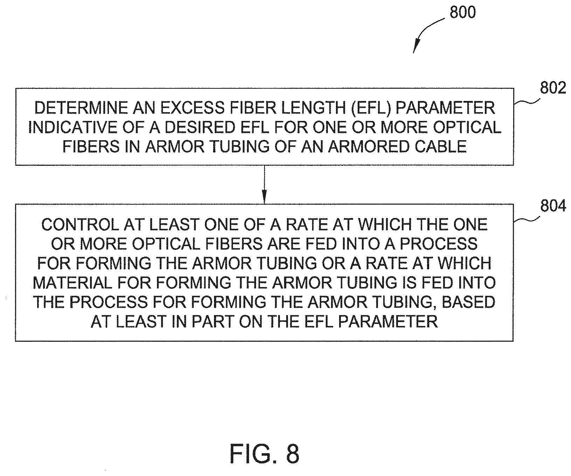

FIG. 8 is a flow diagram of example operations 800 for controlling processing rates during fabrication of an armoured cable, in accordance with one aspect of the present disclosure. The operations 800 may begin, at 802, by determining an EFL parameter indicative of a desired EFL for one or more optical fibres in armour tubing of the armoured cable. At 804, at least one of: (1) a rate at which the one or more optical fibres are fed into a process for forming the armour tubing; or (2) a rate at which material for forming the armour tubing is fed into the process for forming the armour tubing may be controlled, based at least in part on the EFL parameter determined at 802. The process for forming the armour tubing may involve seam welding of the armour tubing.

According to certain aspects, the controlling at 804 includes controlling the rate at which the one or more optical fibres are fed into the process as a function of the EFL parameter and the rate at which the material for forming the armour tubing is fed into the process. For certain aspects, the rate at which the one or more optical fibres are fed into the process is controlled by controlling a fibre feed device. The fibre feed device may comprise a fibre feed capstan, a banded tractor pulling/pushing mechanism, a fluid pump (*e.g*., a viscous gel pump), or a gas venturi.

According to certain aspects, the controlling at 804 includes controlling the rate at which the one or more optical fibres are fed into one or more inner guide tubes that protect the one or more optical fibres during the process. The inner guide tubes are not part of the final armoured cable (*i.e.*, the armoured cable after the making). For certain aspects, a plurality of optical fibres are fed into a single inner guide tube. At least one outer guide tube may surround the one or more inner guide tubes. For certain aspects, at least one of the inner guide tubes is used to convey at least one of a gel filling, adhesive, lubricant, or inert gas into the armour tubing.

### EXAMPLE OPTICAL FIBRE COATING

Conventional optical fibres may be wrapped in one or more layers of protective sheathing. This protective sheathing may also stiffen the resulting structure, making sheathed optical fibres easier to push into tubes during fabrication of an optical cable. These and other optical fibres may be coated in polymers, such as polyimide or acrylate. Such optical fibre coatings have friction coefficients which make pushing the optical fibres into tubes (e.g., the guide tubes 108) difficult without the sheath. These optical fiber coatings allowed mobility of the fibre having extra fibre length during use, but were not intended to serve to reduce friction during fabrication as the stiffer sheath would allow the optical fibres to be installed easily. The friction builds up as longer lengths of optical fibre are pushed into the tubes. Frictional forces while pushing a polymer-coated optical fibre into a tube may also cause such a fibre to bind inside the tube, resulting in the fibre buckling at the fibre feed mechanism. Also, the conventional optical fibre coatings, when slid along a surface or pushed into tubes, build up a static charge, which further aggravates the frictional forces when pushing. In certain cases, the polymer coating of the optical fibre is under-cured during production. Heat cycling of these under-cured coatings, combined with frictional forces, may also cause the optical fibres to bind inside the armoured cable.

Accordingly, what is needed are techniques and apparatus to reduce optical fibre coating friction, reduce or dissipate static electric charge, and prevent an optical fibre coating from adhering to other optical fibres and to the inner walls of a tube.

According to certain aspects of the present disclosure, coating the optical fibres prior to feeding the optical fibres into the guide tube 108 during the tube welding process reduces the frictional forces and static buildup and allows the optical fibers to be fed without a sheath for stiffening the fibers. Coating of the fibres 102 to reduce friction and static charge may be performed by a coating device 116 prior to pushing the fibres 102 into the guide tube 108. Coating the fibres 102 may be applied in a separate process or concurrently with fibre pushing. This lubricating coating may be applied over the existing polymer coating of conventional optical fibres, which are not intended to serve to reduce friction during fabrication. When a lubricating coating is applied over the existing polymer coating, the lubricating coating also addresses friction related to the under-cured existing polymer coatings of the optical fibres.

According to certain aspects, the lubricating coating of the fibres 102 may be electrically conductive. This provides a conductive path, preventing or dissipating the buildup of static electricity when pushing the fibres 102 into the guide tube 108. Lubricating coatings like polytetrafluoroethylene (PTFE, also known as TEFLON), while reducing the friction, still allow for a buildup of static electricity between surfaces.

According to certain aspects, the lubricating coating of the fibres 102 may comprise a high-temperature-rated substance. As used herein, a high-temperature-rated substance generally refers to a substance capable of withstanding up to at least 300 degrees Celsius without degradation. Downhole operations, as well as the welding operation during fabrication, may subject the lubricating coating to significant heat. Non-limiting examples of lubricating coatings that are effective high-temperature lubricants include graphite, molybdenum disulphide (MoS₂), and boron nitrite coatings. Other commercially available high-temperature lubricants or coatings may also be used.

According to certain aspects, the lubricating coating of the fibres 102 may comprise a dry lubricant. Using a liquid lubricant to aid in pushing the fibre 102 into the guide tube 108 is possible, but may introduce surface tension and other frictional forces. In addition, the liquid lubricant may be absorbed by the polymer coating of conventional fibres over time, causing the polymer coating to swell, which may be undesirable. Alternatively, the inside surface of the guide tube 108 may be coated with the lubricant, and the fibre(s) 102 may not have the lubricating coating applied thereto.

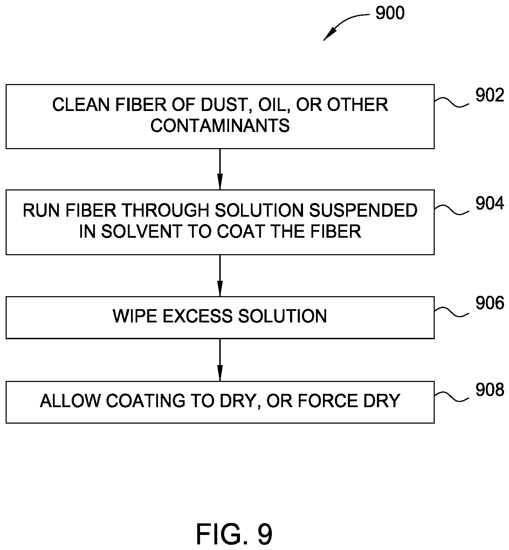

FIG. 9 is a flow diagram of example operations 900 for coating an optical fibre to reduce friction and static, in accordance with one aspect of the present disclosure. The operations 900 may begin, at 902, by cleaning the fibre(s) 102 of any dust, oil, or other contaminants. This cleaning may be applied to the existing polymer coating of the fibre(s) 102. At 904, the cleaned fibre(s) 102 are run through a colloidal solution of the lubricant, such as graphite, suspended in a solvent. Alternatively, the solution may be applied as a spray, or by using various dry applications. At 906, the lubed fibre(s) 102 are wiped of excess solution by, for example, sponges. At 908, the solution remaining on the fibre(s) 102 may be allowed to dry, leaving a thin coating (e.g., a film) of the lubricant on the fibre(s). For certain aspects, this drying may be accelerated by force drying with a heater (e.g., a blow dryer), which may be used to drive away solvent from the solution.

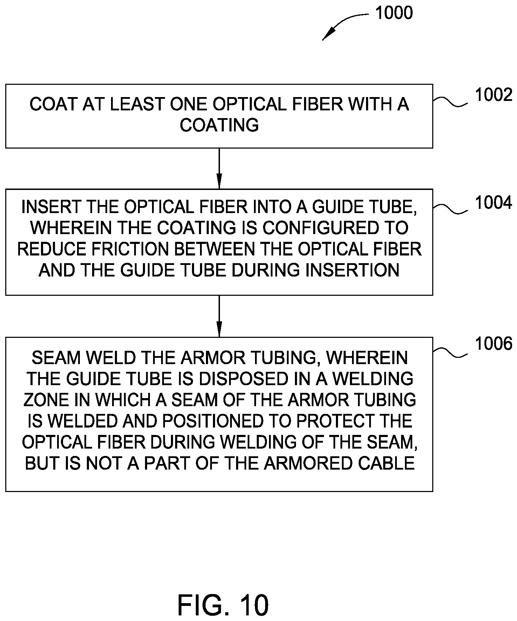

FIG. 10 is a flow diagram of example operations 1000 for making an armored cable, in accordance with one aspect of the present disclosure. The operations 1000 may begin, at 1002, by coating at least one optical fibre (e.g., optical fiber 102) with a lubricating coating. At 1004, the optical fibre is inserted into a guide tube (e.g., guide tube 108), without a separate protective sheathing (i.e., the at least one optical fiber being inserted into the guide tube is not surrounded by a sheath or metal tubing before the insertion). The lubricating coating is configured to reduce friction between the optical fibre and the guide tube during the insertion operation at 1004. At 1006, the armour tubing is seam welded. The guide tube is disposed in a welding zone in which a seam of the armour tubing is welded and is positioned to protect the optical fibre during welding of the seam. The guide tube, however, is not a part of the armoured cable after the armoured cable is made.

As described herein, new cable process techniques are provided that may allow for manufacture of armour tube cables that contain optical fibres without employing an inner tube for containing the fibres. This eliminates the traditional processing of optical fibres inside an inner tube and reduces the overall cost of the cable. The process allows manufacture of armoured cables with single or multiple fibres having a uniformly distributed EFL and that may include gel fillers around the fibre(s).

The techniques presented herein may have advantages over previous solutions of inserting the optical fibre after the cable armour tube is formed, which are typically limited in the continuous length of cable which can be practically manufactured. The EFL in previous processes is not easily controlled and may not be uniformly distributed along the cable length.

While the foregoing is directed to aspects of the present disclosure, other and further aspects of the disclosure may be devised without departing from the basic scope thereof, and the scope thereof is determined by the claims that follow.

## Claims

1. A system for making an armoured cable (100), comprising:
a tube-forming device configured to seam weld an armour tubing (114) of the armoured cable (100);
at least one guide tube (108) disposed in a welding zone (110) in which a seam (402) of the armour tubing is welded, the at least one guide tube positioned to protect at least one optical fibre (102) during welding of the seam, but not being part of the armoured cable after the making; and **characterised by**
a coating device (116) configured to coat the at least one optical fibre with a coating, wherein the coating is configured to reduce friction between the at least one optical fibre and the at least one guide tube during an insertion operation.

2. The system of claim 1, wherein the coating is electrically conductive.

3. The system of claim 1 or 2, wherein the coating comprises a dry lubricant of one of graphite, molybdenum disulphide, or boron nitrite.

4. The system of claim 1, 2 or 3, wherein the coating device is configured to apply a colloidal solution to the at least one optical fibre to coat the at least one optical fibre, wherein the coating device is configured to apply the colloidal solution by one of:
spraying the colloidal solution on the at least one optical fibre; or
running the at least one optical fibre through the colloidal solution and allowing the colloidal solution to dry before the insertion operation.

5. The system of any preceding claim, further comprising a heating device, wherein the coating device is configured to apply a colloidal solution to the at least one optical fibre to coat the at least one optical fibre, wherein the heating device is configured to apply heat to dry the colloidal solution.

6. A method for making an armoured cable (100), comprising:
coating at least one optical fibre (102) with a coating;
inserting the at least one optical fibre into a guide tube (108), wherein the coating is configured to reduce friction between the at least one optical fibre and the guide tube during the insertion; and
seam welding an armour tubing (114) of the armoured cable, wherein the guide tube is disposed in a welding zone (110) in which a seam (402) of the armour tubing is welded, the guide tube positioned to protect the at least one optical fibre during welding of the seam, but not being part of the armoured cable after the making.

7. The method of claim 6, wherein the coating is electrically conductive.

8. The method of claim 6 or 7, wherein the coating comprises a dry lubricant, wherein the dry lubricant comprises graphite, molybdenum disulphide, or boron nitrite.

9. The method of claim 6, 7 or 8, wherein coating the at least one optical fibre comprises applying a colloidal solution to the at least one optical fibre, wherein the applying comprises one of:
spraying the colloidal solution on the at least one optical fibre; or
running the at least one optical fibre through the colloidal solution and allowing the colloidal solution to dry before the insertion.

10. The method of any of claims 6 to 9, wherein coating the at least one optical fibre comprises:
applying a colloidal solution to the at least one optical fibre; and
applying heat to dry the colloidal solution.

## Patentansprüche

1. System zum Herstellen eines gepanzerten Kabels (100), Folgendes beinhaltend:
eine Röhren bildende Vorrichtung, welche konfiguriert ist, um eine Panzerverrohrung (114) des gepanzerten Kabels (100) zu verschweißen;
mindestens ein Führungsrohr (108), welches in einem Schweißbereich (110) angeordnet ist, in welchem eine Naht (402) der Panzerverrohrung geschweißt wird, wobei das mindestens eine Führungsrohr positioniert ist, um mindestens einen Lichtwellenleiter (102) beim Schweißen der Naht zu schützen, jedoch nicht Bestandteil des gepanzerten Kabels nach der Herstellung ist; und **dadurch gekennzeichnet, dass**
eine Beschichtungsvorrichtung (116) konfiguriert ist, um den mindestens einen Lichtwellenleiter mit einer Beschichtung zu beschichten, wobei die Beschichtung konfiguriert ist, um Reibung zwischen dem mindestens einen Lichtwellenleiter und dem mindestens einen Führungsrohr im Zuge eines Einsetzschrittes zu verringern.

2. System nach Anspruch 1, bei welchem die Beschichtung elektrisch leitfähig ist.

3. System nach Anspruch 1 oder 2, bei welchem die Beschichtung ein trockenes Schmiermittel beinhaltet, bestehend aus einem Element der Gruppe, bestehend aus Graphit, Molybdändisulfid oder Bornitrit.

4. System nach Anspruch 1, 2 oder 3, bei welchem die Beschichtungsvorrichtung konfiguriert ist, um eine kolloidale Lösung auf den mindestens einen Lichtwellenleiter aufzutragen, um den mindestens einen Lichtwellenleiter zu beschichten, wobei die Beschichtungsvorrichtung konfiguriert ist, um die kolloidale Lösung durch einen der folgenden Schritte aufzutragen:
Sprühen der kolloidalen Lösung auf den mindestens einen Lichtwellenleiter; oder
Passieren des mindestens einen Lichtwellenleiters durch die kolloidale Lösung und Ermöglichen des Trocknens der kolloidalen Lösung vor dem Einsetzschritt.

5. System nach einem der vorhergehenden Ansprüche, zudem beinhaltend eine Erhitzungsvorrichtung, bei welchem die Beschichtungsvorrichtung konfiguriert ist, um eine kolloidale Lösung auf den mindestens einen Lichtwellenleiter aufzutragen, um den mindestens einen Lichtwellenleiter zu beschichten, wobei die Erhitzungsvorrichtung konfiguriert ist, um Hitze zum Trocknen der kolloidalen Lösung aufzubringen.

6. Verfahren zum Herstellen eines gepanzerten Kabels (100), Folgendes beinhaltend:
Beschichten von mindestens einem Lichtwellenleiter (102) mit einer Beschichtung;
Einsetzen des mindestens einen Lichtwellenleiters in ein Führungsrohr (108), wobei die Beschichtung konfiguriert ist, um Reibung zwischen dem mindestens einen Lichtwellenleiter und dem Führungsrohr im Zuge des Einsetzens zu verringern; und
Nahtschweißen einer Panzerverrohrung (114) des gepanzerten Kabels, bei welchem das Führungsrohr in einem Schweißbereich (110) angeordnet ist, in welchem eine Naht (402) der Panzerverrohrung geschweißt wird, wobei das Führungsrohr positioniert ist, um den mindestens einen Lichtwellenleiter beim Schweißen der Naht zu schützen, jedoch nicht Bestandteil des gepanzerten Kabels nach der Herstellung ist.

7. Verfahren nach Anspruch 6, bei welchem die Beschichtung elektrisch leitfähig ist.

8. Verfahren nach Anspruch 6 oder 7, bei welchem die Beschichtung ein trockenes Schmiermittel beinhaltet, wobei das trockene Schmiermittel Graphit, Molybdändisulfid oder Bornitrit beinhaltet.

9. Verfahren nach Anspruch 6, 7 oder 8, bei welchem Beschichten des mindestens einen Lichtwellenleiters Auftragen einer kolloidalen Lösung auf dem mindestens einen Lichtwellenleiter beinhaltet, wobei das Auftragen einen der folgenden Schritte beinhaltet:
Sprühen der kolloidalen Lösung auf den mindestens einen Lichtwellenleiter; oder
Passieren des mindestens einen Lichtwellenleiters durch die kolloidale Lösung und Ermöglichen des Trocknens der kolloidalen Lösung vor dem Einsetzen.

10. Verfahren nach einem der Ansprüche 6 bis 9, bei welchem Beschichten des mindestens einen Lichtwellenleiters Folgendes beinhaltet:
Auftragen einer kolloidalen Lösung auf dem mindestens einen Lichtwellenleiter; und
Aufbringen von Hitze zum Trocknen der kolloidalen Lösung.

## Revendications

1. Système permettant de réaliser un câble blindé (100) comprenant :
un dispositif de formation de tube configuré afin de souder à la molette un tubage de blindage (114) du câble blindé (100) ;
au moins un tube de guidage (108) disposé dans une zone de soudage (110) dans lequel un joint (402) du tubage de blindage est soudé, le au moins un tube de guidage étant positionné afin de protéger au moins une fibre optique (102) pendant le soudage du joint, mais ne faisant pas partie du câble blindé après la réalisation ; et **caractérisé par**
un dispositif de revêtement (116) configuré afin de revêtir la au moins une fibre optique avec un revêtement, dans lequel le revêtement est configuré afin de réduire le frottement entre la au moins une fibre optique et le au moins un tube de guidage pendant une opération d'insertion.

2. Système selon la revendication 1, dans lequel le revêtement est électriquement conducteur.

3. Système selon la revendication 1 ou 2, dans lequel le revêtement comprend un lubrifiant sec d'un élément parmi le graphite, le disulfure de molybdène, ou le nitrite de bore.

4. Système selon la revendication 1, 2 ou 3, dans lequel le dispositif de revêtement est configuré afin d'appliquer une solution colloïdale sur la au moins une fibre optique permettant de revêtir la au moins une fibre optique, dans lequel le dispositif de revêtement est configuré afin d'appliquer la solution colloïdale selon un procédé consistant à :
appliquer la solution colloïdale sur la au moins une fibre optique ; ou
faire passer la au moins une fibre optique à travers la solution colloïdale et laisser la solution colloïdale sécher avant l'opération d'insertion.

5. Système selon l'une quelconque des revendications précédentes, comprenant en outre un dispositif de chauffage, dans lequel le dispositif de revêtement est configuré afin d'appliquer une solution colloïdale à la au moins une fibre optique permettant de revêtir la au moins une fibre optique, dans lequel le dispositif de chauffage est configuré afin d'appliquer de la chaleur permettant de sécher la solution colloïdale.

6. Procédé permettant de réaliser un câble blindé (100), comprenant :
le revêtement d'au moins une fibre optique (102) avec un revêtement ;
l'insertion de la au moins une fibre optique dans un tube de guidage (108), dans lequel le revêtement est configuré afin de réduire le frottement entre la au moins une fibre optique et le tube de guidage pendant l'insertion ; et
le soudage à la molette d'un tubage de blindage (114) du câble blindé, dans lequel le tube de guidage est disposé dans une zone de soudage (110) dans laquelle un joint (402) du tubage de blindage est soudé, le tube de guidage est positionné de manière à protéger la au moins une fibre optique pendant le soudage du joint, mais sans faire partie du câble blindé après la réalisation.

7. Procédé selon la revendication 6, dans lequel le revêtement est électriquement conducteur.

8. Procédé selon la revendication 6 ou 7, dans lequel le revêtement comprend un lubrifiant sec, dans lequel le lubrifiant sec comprend du graphite, du disulfure de molybdène ou du nitrite de bore.

9. Procédé selon la revendication 6, 7 ou 8, dans lequel le revêtement de la au moins une fibre optique comprend l'application d'une solution colloïdale à la au moins une fibre optique, dans lequel l'application comprend un procédé consistant à :
vaporiser la solution colloïdale sur la au moins une fibre optique ; ou
faire passer la au moins une fibre optique à travers la solution colloïdale et laisser la solution colloïdale sécher avant l'insertion.

10. Procédé selon l'une quelconque des revendications 6 à 9, dans lequel le revêtement de la au moins une fibre optique comprend :
l'application d'une solution colloïdale à la au moins une fibre optique ; et
l'application de chaleur permettant de sécher la solution colloïdale.
